# EUROPEAN PATENT APPLICATION

(11) **EP 4 043 247 A1**
(43) Date of publication of application: **17.08.2022**
(21) Application number: 20951833.1
(22) Date of filing: 18.12.2020
(51) Int. Cl.: B60C 23/12

(54) **AIR SUPPLY SYSTEM**

(71) Applicant: Pacific Industrial Co., Ltd., Ogaki-shi, Gifu 503-8603 (JP)
(72) Inventor: YAMADA, Hirohisa, Ogaki-shi, Gifu 503-8603 (JP)
(74) Representative: Kramer Barske Schmidtchen Patentanwälte PartG mbB
(86) International application number: PCT/JP2020/047496
(87) International publication number: WO 2022/130628

(57) **Abstract**

[Problem] To provide an air supply system with higher pump durability than before.

[Solution] An air supply system 100A of the present disclosure includes a pump 10 attached to a wheel 91 and discharging compressed air into a tire 92 by extending and contracting in directions perpendicular to a rotation axis J1 of the wheel 91, and a cam member 21 rotatably supported on the wheel 91 and having a center of gravity eccentric to the wheel 91 and an annular cam surface 21B eccentric to the wheel. The cam member 21 rotates relative to the wheel 91 as the wheel 91 rotates, with one end part of the pump 10 following the cam surface 21B, causing the pump 10 to extend and contract to supply air into the tire 92. When the pressure inside the tire 92 reaches or exceeds a reference upper limit and air supply is not necessary, a pump on/off mechanism is activated by this pressure to stop the pump 10.

## Description

### TECHNICAL FIELD

The present disclosure relates to an air supply system that supplies the air to a tire by using rotation of a wheel.

### BACKGROUND ART

An existing air supply system of this type has a pump that is attached to the wheel and keeps supplying the air to the tire by operating in concert with the rotation of the wheel. When the pressure inside the tire reaches or exceeds a reference level, the air that the pump discharges is released to the outside air (see, for example, Patent Literature 1).

### RELATED ART DOCUMENTS

### PATENT DOCUMENTS

Patent Document 1: JP 6-510252 T (Page 2, L25 lower left column to L11 lower left column, Fig. 6)

### SUMMARY OF THE INVENTION

### PROBLEMS TO BE SOLVED BY THE INVENTION

The existing air supply system described above sometimes has an issue of pump durability, because of which a technique that makes the pump durability higher than before is being sought to be developed.

### MEANS OF SOLVING THE PROBLEMS

An air supply system according to one aspect of the present invention made to solve the above problem includes: a telescopic pump attached to a wheel and discharging compressed air into a tire by extending and contracting in directions perpendicular to a rotation axis of the wheel; and a cam member rotatably supported on the wheel and having a center of gravity eccentric to the wheel and an annular cam surface eccentric to the wheel, wherein the cam member rotating relative to the wheel as the wheel rotates, with one end part of the pump following the cam surface, causing the pump to extend and contract to supply air into the tire by a rotary power of the wheel being transmitted to the pump via the cam member, and the air supply system includes a pump on/off mechanism that is activated upon receiving a pressure inside the tire, allowing the pump to operate when the pressure inside the tire is at or below a reference lower limit, and stopping the pump when the pressure inside the tire is at or above a reference upper limit that is larger than the reference lower limit.

### BRIEF DESCRIPTION OF THE DRAWINGS

Fig. 1 is a cross-sectional side view of a wheel equipped with an air supply system of a first embodiment.
Fig. 2 is a cross-sectional side view of the air supply system.
Fig. 3 (A) and (B) are front views of the air supply system.
Fig. 4 (A) is a cross-sectional side view of a first actuator in which a piston is at a first position, and (B) is a cross-sectional side view of the first actuator in which the piston is at a second position.
Fig. 5 is a cross-sectional side view of the air supply system in which a cam member and a dummy member are locked.
Fig. 6 is a cross-sectional side view of an air supply system of a second embodiment.
Fig. 7 is a cross-sectional side view of an air supply system of a third embodiment.
Fig. 8 (A) and (B) are front views of an air supply system of a fourth embodiment.
Fig. 9 (A) and (B) are conceptual diagrams of an air supply system in a variation example of the present disclosure.

### MODE FOR CARRYING OUT THE INVENTION

### [First embodiment]

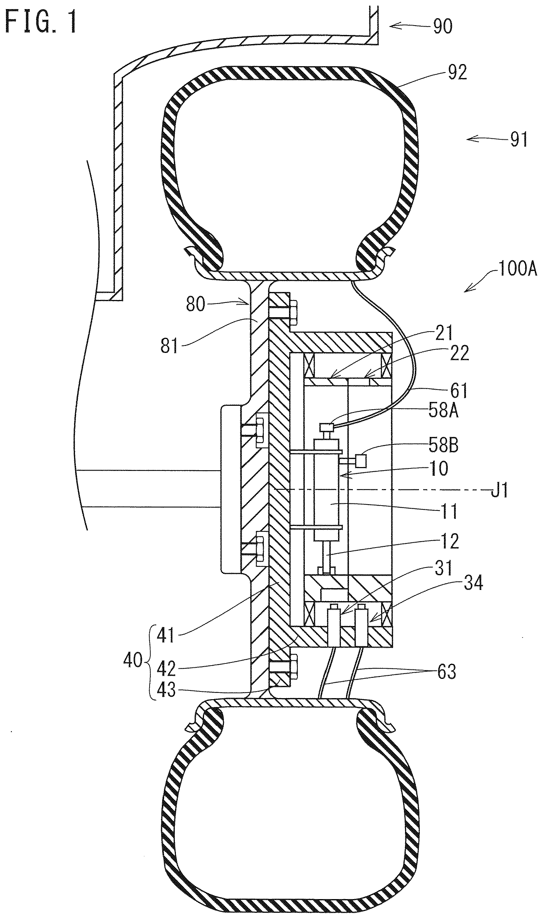

Hereinafter an air supply system 100A according to a first embodiment of the present disclosure will be described with reference to Fig. 1 to Fig. 5. As illustrated in Fig. 1, the air supply system 100A of this embodiment is entirely covered by a case 40, for example. The case 40 forms a structure in which one end part of a cylindrical wall 42 is closed by a circular base plate 41, and the other end is closed by a lid (not shown). The base plate 41 is overlapped on an outer face of a disc part 81 of a tire wheel 80 of a wheel 91 of a vehicle 90, and attachment pieces 43 extending out from the base plate 41 are fixed to the tire wheel 80 with bolts, in a state where the center axis of the case 40 is matched with the rotation axis J1 of the wheel 91.

While the air supply system 100A is preferably attached to all the wheels 91 of the vehicle 90, the system may be attached to only one or more of the wheel(s) 91 of the vehicle 90.

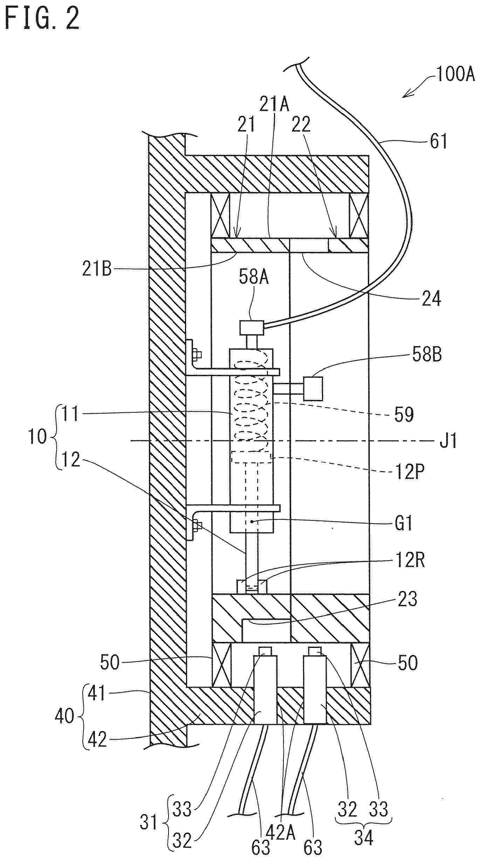

As illustrated in Fig. 2, a ring-shaped cam member 21 and a ring-shaped dummy member 22 are coaxially arranged inside the cylindrical wall 42, each of them being rotatably supported on the cylindrical wall 42 by bearings 50, for example.

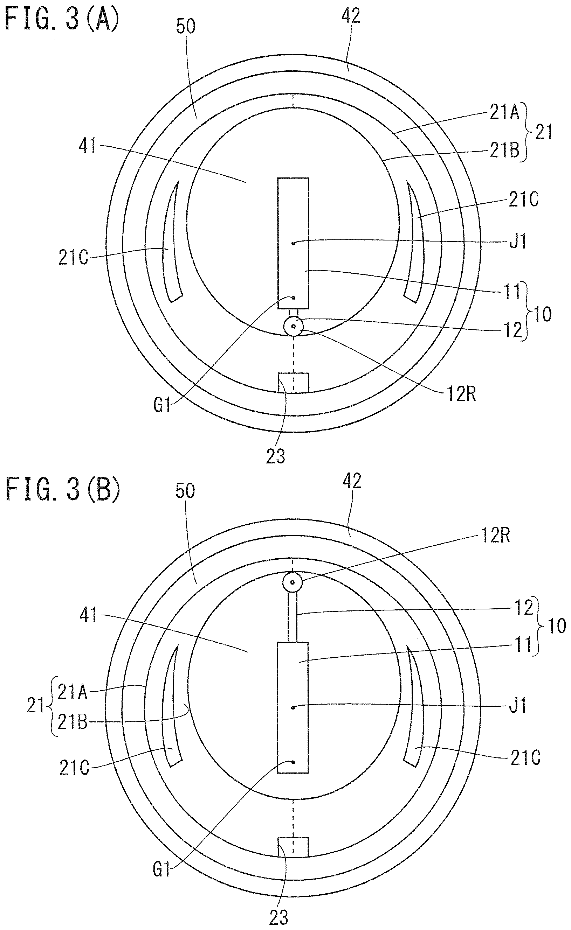

The cam member 21 disposed on the side closer to the base plate 41 includes, as illustrated in Fig. 3, an outer circumferential surface 21A being concentric to the cylindrical wall 42 (e.g., concentric to the rotation axis J1 of the wheel 91), and a cam surface 21B that is an inner circumferential surface of a circle or oval or ellipse being eccentric to the outer circumferential surface 21A. Consequently, the cam member 21 has a center of gravity G1 that is eccentric to the outer circumferential surface 21A of the cam member 21.

The cam member 21 is symmetrical around a fictional centerline of symmetry connecting the center of gravity G1 and the center axis of the outer circumferential surface 21A, and formed with holes 21C for weight reduction of the cam member 21 on both sides of the centerline of symmetry. Further, a lock hole 23 is opened in the outer circumferential surface 21A on the centerline of symmetry in a thick part of the cam member 21.

The dummy member 22 has the same shape as that of the cam member 21 except for the position of a lock hole 24. This lock hole 24 is located on the centerline of symmetry in a thin part of the dummy member 22 (see Fig. 2).

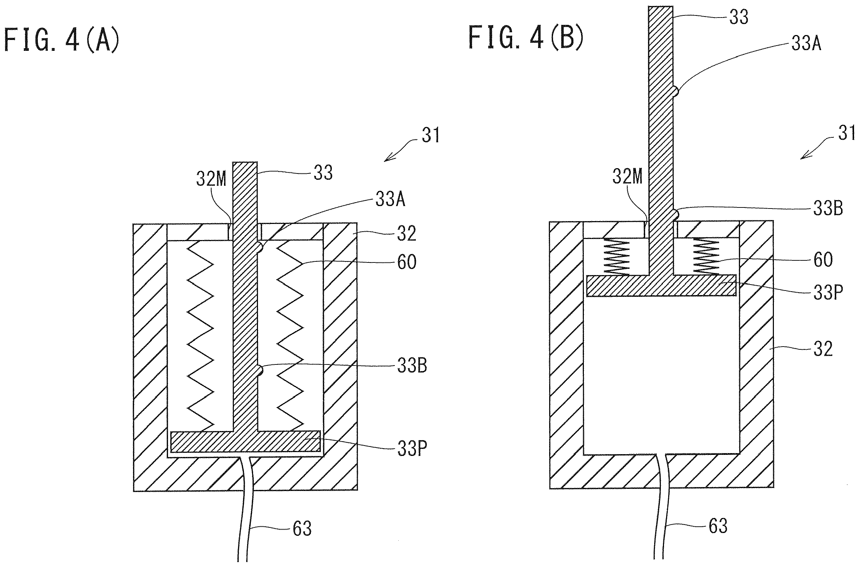

As illustrated in Fig. 2, the cylindrical wall 42 is provided with first and second actuators 31 and 34 for locking the cam member 21 and dummy member 22 so that they can be rotated with the cylindrical wall 42. The first actuator 31 has a cylinder 32 supporting a piston 33 such as to be movable linearly, and, as illustrated in Fig. 4, is configured such that a resilient member 60 (specifically, a compression coil spring, for example) accommodated inside the cylinder 32 biases the piston 33 to be retracted inside the cylinder 32. The cylinder 32 is fixedly fitted into a through hole 42A formed in the cylindrical wall 42 so that the piston 33 is abutted on the outer circumferential surface 21A of the cam member 21, as illustrated in Fig. 2.

The interior of the cylinder 32 is connected to the tire 92 by a pipe 63. A pressure receiving plate 33P fixed to the proximal end of the piston 33 inside the cylinder 32 receives pressure inside of the tire 92 to push the piston 33 out of the cylinder 32. Moreover, as illustrated in Fig. 4(A), first and second locking protrusions 33A and 33B are provided at two points along the longitudinal direction of the piston 33, for example. The piston 33 moves between a first position where the protruding amount from the cylinder 32 is smallest as illustrated in Fig. 4(A), and a second position where the protruding amount of the piston 33 from the cylinder 32 is largest as illustrated in Fig. 4(B), in the course of which the piston overcomes the engagement between a locking portion 32M of the cylinder 32 that is an opening edge of a through hole for the piston 33 to pass through, and the first and second locking protrusions 33A and 33B.

More specifically, when the piston 33 is located at the first position shown in Fig. 4(A) and the pressure inside the tire 92 builds up and reaches a reference upper limit, the piston 33 moves from the first position to the second position shown in Fig. 4(B) against the engagement force between the first locking protrusion 33A and the locking portion 32M, and the resilient force of the resilient member 60, where the second locking protrusion 33B and the locking portion 32M engage each other to retain the piston 33 at the second position.

When the piston 33 is located at the second position and the pressure inside the tire 92 lowers and reaches a reference lower limit, the resilient force of the resilient member 60 moves the piston 33 from the second position to the first position against this pressure and the engagement force between the second locking protrusion 33B and the locking portion 32M, where the first locking protrusion 33A and the locking portion 32M engage each other to retain the piston 33 at the first position. When the piston 33 is placed at the first position, it is separated sideways from the cam member 21, and when placed at the second position, it is abutted on the outer circumferential surface 21A of the cam member 21. When the piston comes to face the lock hole 23, the piston goes into the lock hole 23 to lock the cam member 21 to the cylindrical wall 42 so that the cam member can rotate therewith. Namely, the first actuator 31 moves in concert with the pressure inside the tire 92 such as to allow the cam member 21 to rotate when the pressure inside the tire 92 is at or below the reference lower limit, and to lock the cam member 21 when the pressure inside the tire 92 is at or above the reference upper limit.

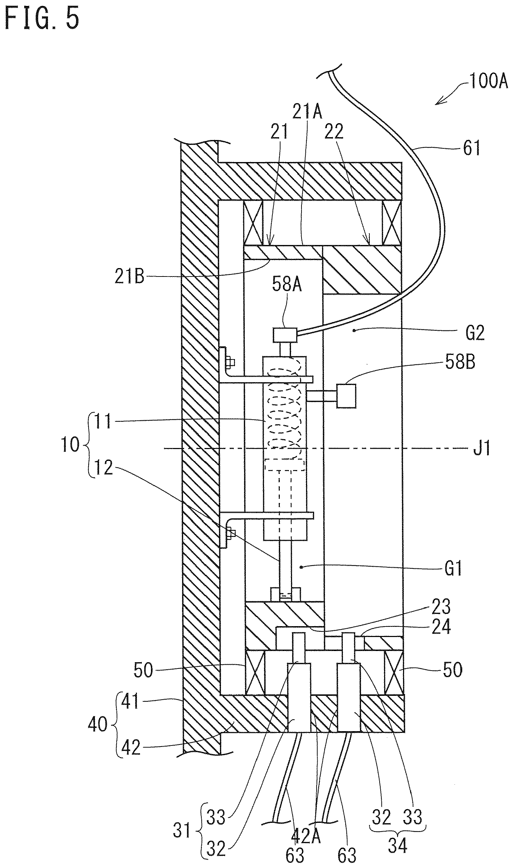

The second actuator 34 has the same structure as that of the first actuator 31. The cylinder 32 of the second actuator 34 is aligned with the cylinder 32 of the first actuator 31 along the axial direction of the cylindrical wall 42, and fixedly fitted to the cylindrical wall 42A of the cylindrical wall 42. The piston 33 of the second actuator 34 is abutted on the outer circumferential surface of the dummy member 22. The second actuator 34 also moves in concert with the pressure inside the tire 92 to allow the dummy member 22 to rotate when the pressure inside the tire 92 is at or below the reference lower limit, and to lock the dummy member 22 when the pressure inside the tire 92 is at or above the reference upper limit. When the cam member 21 and the dummy member 22 are both locked, the center of gravity G1 of the cam member 21 and the center of gravity G2 of the dummy member 22 are placed at symmetrical positions around the rotation axis J1 of the wheel 91, as shown in Fig. 5.

As shown in Fig. 2, a telescopic pump 10 is attached to the base plate 41. The pump 10 has a cylinder 11 and a piston 12 engaged therewith such as to be movable linearly. A pressure receiving plate 12P is fixed to the proximal end of the piston 12 inside the cylinder 11, and a resilient member 59 that biases the piston 12 in a direction in which the piston protrudes from the cylinder 11 is accommodated between this pressure receiving plate 12P and one end face of the cylinder 11. The cylinder 11 is fixed to the base plate 41 in a state in which its center is perpendicular to the rotation axis J1 of the wheel 91 and extends in the radial direction of the case 40, with the distal end of the piston 12 abutted on the cam surface 21B that is an inner circumferential surface of the cam member 21. A roller 12R that rolls on the cam surface 21B is provided to a distal end part of the piston 12. These allow the distal end part of the piston 12 to follow the cam surface 21B and to move back and forth relative to the cylinder 11, as the cam member 21 rotates relative to the case 40 (see Fig. 3).

A first check valve 58A and a second check valve 58B are connected to the cylinder 11. The first check valve 58A allows the air to be let out of the cylinder 11 and restricts the air from flowing into the cylinder 11. The second check valve 58B, conversely, restricts the air from being let out of the cylinder 11, and allows the air to flow into the cylinder 11. The first check valve 58A has an air outlet connected to the tire 92 by a pipe 61, while the second check valve 58B has an air inlet that is open so that the outside air can be taken in. These allow the air to be supplied from the pump 10 into the tire 92 as the piston 12 moves back and forth in the cylinder 11.

The structure of the air supply system 100A according to this embodiment is as has been described above. The "locking mechanism" as set forth in the claims includes, in this embodiment, the first locking protrusion 33A, the second locking protrusion 33B, and the locking portion 32M. The "pump on/off mechanism" as set forth in the claims includes the first actuator 31 and cam member 21 as major parts.

Next, the advantageous effects of the air supply system 100A will be explained. When the pressure inside the tire 92 is at or above the reference upper limit, the cam member 21 and dummy member 22 are locked by the first and second actuators 31 and 34 which have received tire pressure so that the cam member and dummy member rotate with the wheel 91. This causes the piston 12 of the pump 10 to be retained in a state abutted on one point on the cam surface 21B of the cam member 21 and to be stopped, so that the pump 10 does not operate during the drive of the vehicle 90.

Even when the pressure inside the tire 92 lowers to a level slightly below the reference upper limit, the lock of the cam member 21 and dummy member 22 by the first and second actuators 31 and 34 is not released, unless the pressure reaches or falls below the reference lower limit. Specifically, unless the pressure inside the tire 92 reaches or falls below the reference lower limit, the resilient force of the resilient members 60 of the first and second actuators 31 and 34 cannot overcome the pressure inside the tire 92 and the engagement force between the second locking protrusion 33B and the locking portion 32M to retract the pistons 33 into the cylinders 32, so that the lock of the cam member 21 and dummy member 22 by the first and second actuators 31 and 34 is not released. This prevents a "hunting phenomenon" or the oscillating motion of the pump 10 frequently and repeatedly stopping and starting in response to slight changes in pressure inside the tire 92 near the reference upper limit.

When the pressure inside the tire 92 reaches or falls below the reference lower limit, the resilient force of the resilient members 60 of the first and second actuators 31 and 34 overcomes the pressure inside the tire 92 and the engagement force between the second locking protrusion 33B and the locking portion 32M, so that the pistons 33 are retracted into the cylinders 32 and move from the second position to the first position. This releases the lock of the cam member 21 and dummy member 22 by the first and second actuators 31 and 34, so that the cam member 21 and dummy member 22 become able to rotate relative to the wheel 91. Even when the vehicle 90 is driven and the wheel 91 is rotated, the cam member 21 and dummy member 22 are kept in a state in which their centers of gravity G1 and G2 are positioned below the rotation axis J1 of the wheel 91. This allows the piston 12 of the pump 10 that rotates with the wheel 91 to follow the cam surface 21B of the cam member 21 and to move back and forth relative to the cylinder 11 (i.e., allows the pump 10 to extend and retract) so that the air is supplied to the tire 92.

In this case, too, even when the pressure inside the tire 92 rises slightly and exceeds the reference lower limit, the cam member 21 and dummy member 22 will not be locked by the first and second actuators 31 and 34 unless the pressure reaches or exceeds the reference upper limit. This prevents the hunting phenomenon or the oscillating motion of the pump 10 frequently and repeatedly stopping and starting in response to slight changes in pressure inside the tire 92 near the reference lower limit.

When the pressure inside the tire 92 reaches or exceeds the reference upper limit, the pressure inside the tire 92 overcomes the resilient force of the resilient members 60 of the first and second actuators 31 and 34 and the engagement force between the first locking protrusion 33A and the locking portion 32M, so that the pistons 33 are pushed out of the cylinders 32 and move to the second position. This causes the first actuator 31 and second actuator 34 to lock the cam member 21 and dummy member 22, which brings the pump 10 to a halt. In this state, the centers of gravity G1 and G2 of the cam member 21 and dummy member 22 are positioned symmetrically around the rotation axis J1 of the wheel 91, which gives a good balance to the wheel and suppresses vibration during the rotation of the wheel 91.

As described above, the air supply system 100A of this embodiment allows the pump 10 to operate in concert with the rotation of the wheel 91 to automatically supply the air to the tire 92. When the pressure inside the tire 92 reaches or exceeds the reference upper limit, this pressure activates the pump on/off mechanism to stop the pump 10. Namely, when air supply to the tire 92 is not necessary, the pump 10 is paused even when the wheel 91 is rotating, so that the pump 10 can have higher durability than before.

### [Second embodiment]

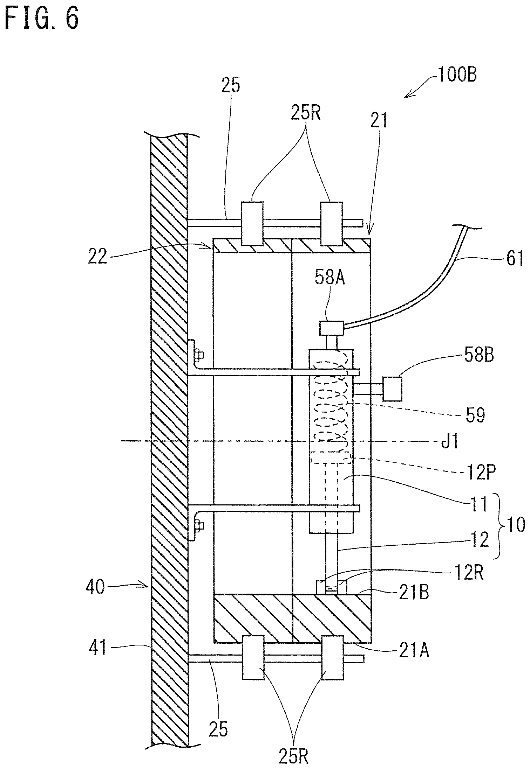

Fig. 6 shows major parts of an air supply system 100B according to a second embodiment of the present disclosure. Hereinafter, the configuration of this air supply system 100B will be described only with respect to the features different from the first embodiment. In this air supply system 100B, a plurality of poles 25 protrude into a case 40 from equidistant points of a circular outer edge of a base plate 41 of the case 40 (see Fig. 2). A roller 25R is rotatably supported on each pole 25, these rollers 25R rotatably supporting a cam member 21 and a dummy member 22. The positions of the cam member 21 and dummy member 22 are inverted from those of the first embodiment, i.e., the dummy member 22 is positioned closer to the base plate 41 than the cam member 21.

The air supply system 100B of this embodiment does not include the first and second actuators 31 and 34 described in the first embodiment. When the pressure inside the tire 92 reaches or exceeds the reference upper limit, a pump 10 locks the cam member 21 so that the cam member rotates with the pump 10.

Specifically, the pump 10 has a similar structure as that of the first embodiment, and is connected to the tire 92 via the first check valve 58A (see Fig. 2). The higher the pressure inside the tire 92, the larger the resistance of the piston 12 being pressed into the cylinder 11. Using this, the pump is designed such that, when the pressure inside the tire 92 reaches or exceeds the reference upper limit, the piston 12 cannot be pressed into the cylinder 11 by the own weight of the cam member 21 when the piston 12 is most protruded from the cylinder 11.

The lock of the cam member 21 by the pump 10 cannot be released in a case where the pressure inside the tire 92 lowers only slightly below the reference upper limit due to the fluid resistance when the air is supplied from the cylinder 11 to the tire 92, the resistance when opening the first check valve 58A, etc. Accordingly, the hunting phenomenon is prevented. The lock of the cam member 21 by the pump 10 is released only when the pressure inside the tire 92 has lowered to or below the reference lower limit.

Abutment parts (not shown) are provided between the cam member 21 and the dummy member 22 that abut each other to cause the dummy member 22 to rotate with the cam member 21 when the center of gravity G1 of the cam member 21 and the center of gravity G2 of the dummy member 22 come to symmetrical positions around the rotation axis J1 of the wheel 91 (see Fig. 5). This gives a good balance to the wheel and prevents vibration when the cam member 21 rotates with the wheel 91.

The structure of the air supply system 100B according to this embodiment is as has been described above. The air supply system 100B of this embodiment uses its own pump 10 that supplies the air to the tire 92 to stop the pump 10 itself by stopping the cam member 21 relative to the wheel 91 when the pressure inside the tire 92 reaches or exceeds the reference upper limit. The air supply system 100B of this embodiment thus makes efficient use of the pump 10.

### [Third embodiment]

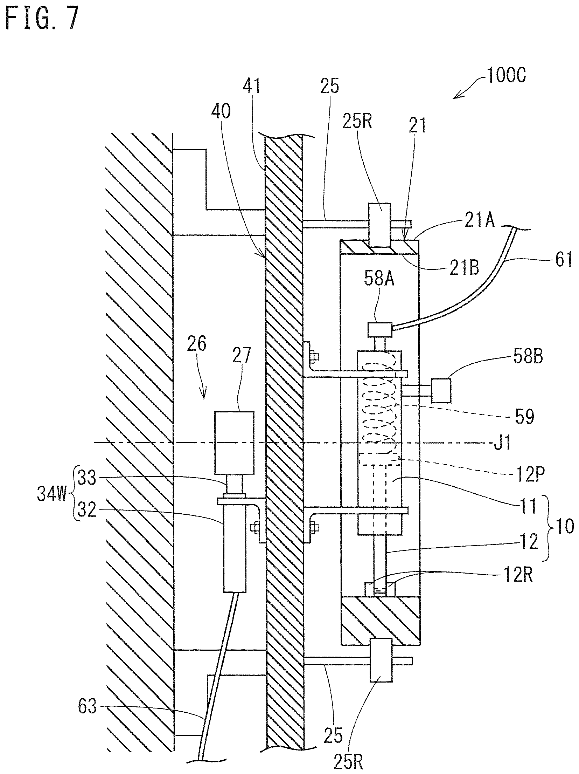

The air supply system 100C of this embodiment is illustrated in Fig. 7, and includes a balancer device 26 on the back side of a base plate 41, instead of the dummy member 22 of the air supply system 100B of the second embodiment. Specifically, only a cam member 21 is rotatably supported on the front side of the base plate 41, and no dummy member 22 is provided. The balancer device 26 on the back side of the base plate 41 has a structure in which a block 27 is fixed to the tip of a piston 33 of an actuator 34W having the same structure as that of the second actuator 34 described in the first embodiment. A cylinder 32 of the actuator 34W is disposed parallel to a cylinder 11 (see Fig. 7) of a pump 10 on the front side of the base plate 41. The piston 33 of the actuator 34W protrudes from the cylinder 32 in the opposite direction to the direction in which a piston 12 of the pump 10 protrudes from the cylinder 11.

The cylinder 32 is fixed to the base plate 41. When the pressure inside a tire 92 is at or below the reference lower limit, the piston 33 is retracted into the cylinder 32 so that the block 27 is positioned near the center of the base plate 41. In this state, the center of gravity of the entire balancer device 26 is positioned on or near the rotation axis J1 of the wheel 91. When the pressure inside the tire 92 reaches or exceeds the reference upper limit, the piston 33 is pushed out of the cylinder 32 so that the block 27 is positioned away from the center of the base plate 41. In this state, the center of gravity of the entire balancer device 26 is placed symmetrically to the center of gravity G1 of the cam member 21 with respect to the rotation axis J1 of the wheel 91.

### [Fourth embodiment]

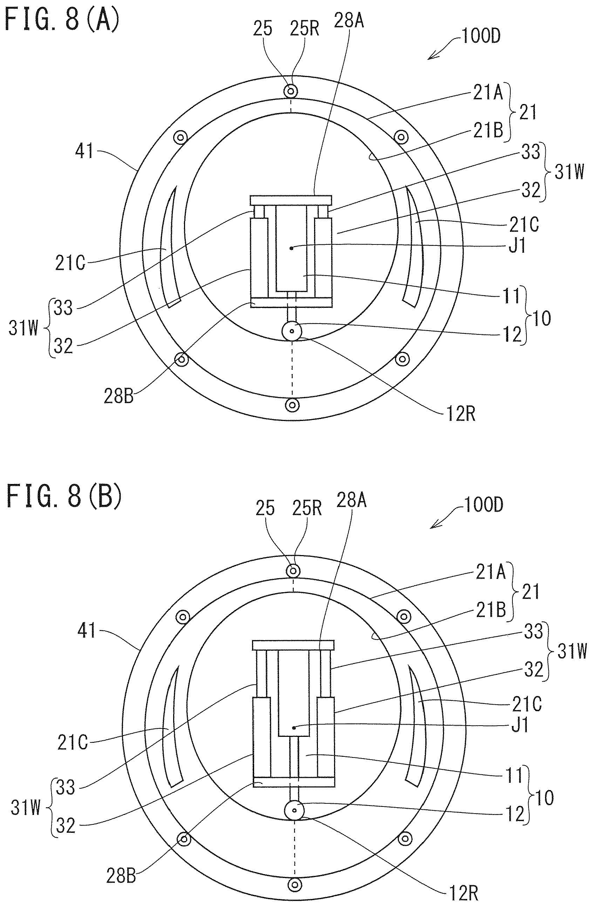

The air supply system 100D of this embodiment is illustrated in Fig. 8. The mechanism for locking the dummy member 22 and cam member 21 in the air supply system 100B of the second embodiment is omitted. The air supply system has a structure in which the entire pump 10 is moved relative to the base plate 41 so that the piston 12 does not follow the cam surface 21B of the cam member 21 to stop the pump 10.

Specifically, a pair of actuators 31W having the same structure as that of the first actuator 31 described in the first embodiment are provided one each on both sides of the pump 10, and cylinders 32 of this pair of actuators 31W are fixed to the base plate 41. The pistons 33 of the pair of actuators 31W protrude in the opposite direction to the direction in which the piston 12 of the pump 10 protrudes. A first band plate 28A extends between the distal ends of both pistons 33. The cylinder 11 of the pump 10 is fixed to this first band plate 28A. A second band plate 28B links the proximal ends of the cylinders 32 of the pair of actuators 31W. The piston 12 of the pump 10 is slidably supported in a through hole formed in this second band plate 28B.

When the pressure inside the tire 92 is at or below the reference lower limit, the pistons 33 are retracted into the cylinders 32 so that the distal end of the piston 12 of the pump 10 abuts on the cam surface 21B of the cam member 21, allowing the piston 12 to follow the cam surface 21B and to move back and forth relative to the cylinder 11 as the cam member 21 rotates relative to the wheel 91 (see Fig. 8(A)). When the pressure inside the tire 92 reaches or exceeds the reference upper limit, the pistons 33 are pushed out of the cylinders 32, moving the pump 10 so that the distal end of the piston 12 is moved away from the cam surface 21B (see Fig. 8(B)), which stops the pump 10, as the piston 12 stops following the cam surface 21B.

### [Other embodiments]

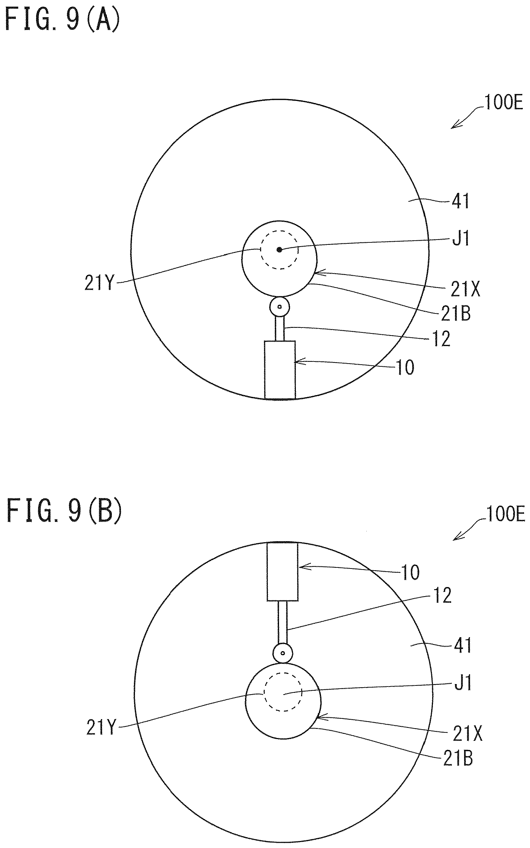

(1) In the first to fourth embodiments described above, the cam member 21 has a ring shape, its inner circumferential surface serving as the cam surface 21B. Alternatively, for example as illustrated in the conceptual diagrams of an air supply system 100E in Fig. 9, the cam member 21X may have a cam surface 21B on its outer circumferential surface. Specifically, this air supply system 100E includes a disc-shaped rotary plate 21Y (not entirely shown) that is rotatably supported on the base plate 41. A columnar cam member 21X being eccentric to the rotation axis J1 of the wheel 91 protrudes from a center part of this rotary plate 21Y, the outer circumferential surface of this cam member forming a cam surface 21B. The piston 12 of the pump 10 fixed to the base plate 41 abuts on the cam surface 21B to allow the pump 10 to operate with the rotation of the rotary plate 21Y relative to the wheel 91.
(2) In the first to fourth embodiments described above, a roller 12R is provided to the distal end of the piston 12. Alternatively, the roller 12R may be omitted, and the distal end part of the piston 12 may make slidable contact with the cam surface 21B.

While specific examples of techniques included in the claims are disclosed in the specification and drawings, the techniques set forth in the claims are not limited to these specific examples but rather include various modifications and alterations of the specific examples, as well as partial extracts from the specific examples.

### DESCRIPTION OF THE REFERENCE NUMERAL

10 Pump
11 Cylinder
12 Piston
12P Pressure receiving plate
12R Roller
20 JP-xxxx-A
21, 21X Cam member
21B Cam surface
22 Dummy member
27 Block
31, 31W, 34, 34W Actuator
32M Locking portion (locking mechanism)
33A First locking protrusion (locking mechanism)
33B Second locking protrusion (locking mechanism)
91 Wheel
92 Tire
100A to 100E Air supply system
G1, G2G Center of gravity
J1 Rotation axis

## Claims

1. An air supply system comprising:
a telescopic pump attached to a wheel and discharging compressed air into a tire by extending and contracting in a direction perpendicular to a rotation axis of the wheel; and
a cam member rotatably supported on the wheel and having a center of gravity being eccentric to the wheel and an annular cam surface being eccentric to the wheel,
wherein the cam member rotating relative to the wheel as the wheel rotates, with one end part of the pump following the cam surface, causing the pump to extend and contract to supply air into the tire by a rotary power of the wheel being transmitted to the pump via the cam member,
the air supply system comprising:
a pump on/off mechanism that is activated upon receiving a pressure inside the tire, allowing the pump to operate when the pressure inside the tire is at or below a reference lower limit, and stopping the pump when the pressure inside the tire is at or above a reference upper limit that is larger than the reference lower limit.

2. The air supply system according to claim 1, wherein the pump is configured such as to be pressed against the cam surface by a force corresponding to the pressure inside the tire to form part of the pump on/off mechanism,
the cam member rotating relative to the wheel against an operation resistance of the pump when the pressure inside the tire is at or below the reference lower limit, and stopping relative to the wheel by the operation resistance of the pump when the pressure inside the tire is at or above the reference upper limit.

3. The air supply system according to claim 1, wherein the pump on/off mechanism includes an air actuator having a cylinder fixed to the wheel and in communication with inside of the tire, and a piston fitted with this cylinder and moving between a first position and a second position,
the piston being placed at the first position when the pressure inside the tire is at or below the reference lower limit to allow power transmission from the wheel to the pump via the cam member, and the piston being placed at the second position when the pressure inside the tire is at or above the reference upper limit to interrupt power transmission from the wheel to the pump via the cam member.

4. The air supply system according to claim 3, wherein the air actuator includes
a resilient member that biases the piston toward the first position against a pressure applied from inside of the cylinder, and a locking mechanism that locks the piston to the first position and to the second position, and wherein
when the piston is placed at the first position and pressure inside the tire rises and reaches the reference upper limit, this pressure causes the piston to move from the first position to the second position against an engagement force of the locking mechanism and a resilient force of the resilient member, and
when the piston is placed at the second position and the pressure inside the tire falls and reaches the reference lower limit, the resilient force of the resilient member causes the piston to move from the second position to the first position against this pressure and the engagement force of the locking mechanism.

5. The air supply system according to claim 3 or 4, wherein the pump on/off mechanism causes the piston to move to the second position to lock the cam member so that the cam member rotates with the wheel, and causes the piston to move to the first position to unlock the cam member.

6. The air supply system according to claim 5, further comprising a dummy member that is rotatably supported on the wheel similarly to the cam member and having a center of gravity being eccentric to the wheel similarly to the cam member, and a pair of the air actuators,
one of the air actuators being used for locking and unlocking the cam member, and
an other of the air actuators locking the dummy member, when the cam member is locked, at a point where the center of gravity of the dummy member is positioned on an opposite side of the center of gravity of the cam member relative to the rotation axis of the wheel, and unlocking the dummy member when the cam member is unlocked.

7. The air supply system according to claim 5, further comprising a balancer supported such as to be movable between a waiting position that is at a center of the wheel and a balancing position that is on an opposite side of the center of gravity of the cam member which is locked relative to the rotation axis of the wheel, and a pair of the air actuators,
one of the air actuators being used for locking and unlocking the cam member, and
an other of the air actuators moving the balancer to the balancing position when the cam member is locked, and moving the balancer to the waiting position when the cam member is unlocked.

8. The air supply system according to claim 3 or 4, wherein the piston is coupled to the pump by the air actuator such that the pump moves between a position where the pump follows the cam surface of the cam member and a position where the pump does not follow the cam surface of the cam member.
